# EUROPÄISCHE PATENTSCHRIFT

(11) **EP 2 895 302 B1**
(45) Veröffentlichungstag und Bekanntmachung des Hinweises auf die Patenterteilung: **15.02.2017**
(21) Anmeldenummer: 13771380.6
(22) Anmeldetag: 12.09.2013
(51) Int. Cl.: B25H 3/04

(54) **UNIVERSAL-KLEMMHALTER ZUR HALTERUNG VON GEGENSTÄNDEN BELIEBIGER ART**
UNIVERSAL HOLDING CLAMP FOR HOLDING OBJECTS OF ANY DESIRED TYPE
SUPPORT DE SERRAGE UNIVERSEL DESTINÉ À RETENIR TOUT TYPE D'OBJET

(30) Priorität: 14.09.2012 DE 102012018175
(43) Veröffentlichungstag der Anmeldung: 22.07.2015
(73) Patentinhaber: Likosar, Ferdinand, 6719 Bludesch (AT); Likosar, Juliane, 6719 Bludesch (AT)
(72) Erfinder: Likosar, Ferdinand, 6719 Bludesch (AT); Likosar, Juliane, 6719 Bludesch (AT)
(74) Vertreter: Riebling, Peter
(86) Internationale Anmeldenummer: PCT/EP2013/002739
(87) Internationale Veröffentlichungsnummer: WO 2014/040735

(56) Entgegenhaltungen:
- EP-A2- 1 936 209
- EP-B1- 0 381 224
- WO-A1-96/24004
- DE-A1-102005 027 202
- US-A- 3 265 032
- US-A- 6 105 915
- US-A1- 2012 049 020

## Beschreibung

Die Erfindung betrifft einen Universal-Klemmhalter zur Halterung von Gegenständen unterschiedlicher und beliebiger Art nach dem Oberbegriff des Patentanspruchs 1.

Ein derartiger Klemmhalter geht beispielsweise aus der EP 1 936 209 A2hervor. Ein Klemmhalter ist mit dem Gegenstand der EP 0 381 224 B1 bekannt geworden, der allerdings nur einen Anwendungszweck zur Halterung von Skiern beschreibt.

Ein Klemmhalter ist auch mit dem Gegenstand der AT 391 795 B oder der DE 44 37 257 C1 bekannt geworden. Der dort beschriebene Klemmhalter ist dadurch gekennzeichnet, dass auf einer Grundplatte zwei drehbar angeordnete und in ihre Dreh- oder Klemmbewegung zueinander synchronisiert bewegbare Klemmbacken vorgesehen sind. Die Synchronisierung zwischen den Drehbewegungen der beiden Klemmbacken erfolgt durch ein Verbindungsgestänge. Mit der jeweiligen Achshülse, an der die Klemmbacke befestigt ist, ist ein drehfester Arm verbunden und die beiden gegeneinander gerichteten Arme überdecken sich im Mittenbereich der Grundplatte und sind dort gelenkig über eine Langlochführung verbunden, um so die Bewegung des einen Armes auf den anderen Arm zu übertragen. Statt einer Langlochführung kann auch eine Verzahnung vorgesehen sein.

Es handelt sich demnach um eine nachlaufende Synchronisierung zwischen der Drehbewegung der einen Klemmbacke, die über die sich überkreuzenden Haltearme und die dort angeordnete Parallelführung auf die andere Klemmbacke übertragen wird. Die EP 0 381 224 B1 beschreibt zwar auch, dass an den Enden der Arme miteinander kämmende Verzahnungen vorgesehen sein können. Nachteil einer solchen Synchronisation ist jedoch, dass der Ersatz der Langlochführung durch eine Verzahnung am freien Ende von sich kreuzenden Armen zu einer instabilen Führung führt, die nicht gegen Ausknicken gesichert ist und keine hohen Drehkräfte übertragen kann.

Damit besteht der Nachteil, dass ein Gleichlauf zwischen den Klemmbacken während der Drehung nicht erzielt werden kann. Aufgrund der gerade ausgebildeten Schwenkarme kommt es zu einem ungleichmäßigen Drehantrieb der beiden aneinander zugeordneten Klemmbacken, was mit dem Nachteil verbunden ist, dass ein Gegenstand nicht sicher geklemmt werden kann.

Des Weiteren ist nachteilig, dass das zur Synchronisierung dienende Verbindungsgestänge freiliegend ist und zu Verletzungen an der Hand eines Benutzers führen kann. Außerdem ist die freiliegende Synchronisationsmechanik störungsanfällig, verschmutzungsanfällig und unterliegt einem erheblichen Verschleiß.

Weiterer Nachteil der bekannten Konstruktion ist, dass eine gegenseitige Vorspannung der Klemmbacken in Schließrichtung nur durch Schwerkraft gegeben ist. Dies bedeutet, dass die bekannte Wandhalterung nur für die Halterung von Skiern oder anderen hängenden Gegenständen geeignet waren, weil die Schließkraft auf die Klemmbacken in Schließrichtung nur durch Schwerkraft der Klemmbacken erfolgte, die schwerkraftbedingt in die Schließstellung zurückverschwenken.

Bei der Verwendung eines solchen Synchronisationsgestänges besteht der weitere Nachteil, dass eine Selbsthemmung im offenen Zustand vorhanden ist, was dazu führt, dass eine Einhandbedienung nicht möglich ist. Im offenen Zustand der Klemmbacken muss die Selbsthemmung durch Eingriff mit der einen Hand aufgehoben werden, um mit der anderen Hand einen Gegenstand in den offenen Klemmspalt zwischen die Klemmbacken zu bringen und die Klemmbacken in ihrer Schließstellung zu bewegen.

Aus den genannten Gründen war der bekannte Klemmhalter nur als Wandhalter einsetzbar und hatte eine schlechte Klemmwirkung.

Die Druckschrift US 2012/049020 A1 offenbart beispielsweise einen Halter für unterschiedliche Werkzeuggrößen und Geräte, welcher jedoch keine Synchronisierung der Bewegung der beiden einander zugeordneten Klemmbacken aufweist.

Mit der EP 1 936 209 A2 wird ein Klemmhalter gezeigt, der mit Klemmbacken und einer zwischen den Klemmbacken angeordneten Zahnstange arbeitet, wobei die Zahnstange Zahnrädern kämmt, die drehfest mit den Klemmbacken verbunden sind. Die Herstellung der Klemmverbindung erfolgt durch die Verschiebung der Zahnstange in der Art des Schraubstockprinzips, wobei am freien Ende der Zahnstange eine Spindelmutter angeordnet ist, die auf einer zugeordneten Gewindespindel aufsitzt und mit dieser kämmt.

Bei Drehung eines Kurbeltriebs wandert die Spindelmutter auf der Spindel in einer bestimmten Richtung und die gesamte Zahnstange wird in dieser Verschiebungsrichtung mitgenommen. Demnach handelt es sich um ein Klemmprinzip nach dem Schraubstockprinzip, bei dem mit Hilfe der Drehung einer Spindelmutter und durch Betätigung eines Kurbeltriebes die beiden Klemmbacken gegeneinander bewegt oder auseinander bewegt werden können. Ein solcher Klemmhalter ist jedoch nicht zur selbsttätigen Klemmung eines Gegenstandes geeignet, wobei der zu klemmende Gegenstand selbst die Klemmung der Klemmbacken auslöst und herbeiführt.

Der Erfindung liegt deshalb die Aufgabe zugrunde, einen Klemmhalter der eingangs genannten Art so weiterzubilden, dass er universell, unabhängig von seiner Befestigungslage und unabhängig vom Gewicht und der Formgebung des zu klemmenden Gegenstandes, eine Klemmwirkung entfaltet.

Zur Lösung der gestellten Aufgabe wird ein Klemmhalter gemäß dem Patentanspruch 1 bereitgestellt.

Wesentliches Merkmal der Erfindung ist, dass das Getriebeelement zur Übertragung der Dreh- oder Schwenkbewegung der einander zugeordneten Klemmbacken durch eine Zahnstange gebildet ist.

In einer Ausführungsform, die nicht unter den Schutzumfang der Ansprüche fällt, können statt einer linear bewegten Zahnstange jedoch auch drehend angetriebene Zahnräder verwendet werden.

Gegenüber dem Stand der Technik, der im Mittenbereich zweier sich kreuzender Arme eine Verzahnung vorsieht, hat die Erfindung den Vorteil, dass die bekannte, mittige Verzahnung nunmehr in zwei voneinander getrennte Verzahnungen aufgeteilt ist und beide voneinander getrennten Verzahnungen nun in den Bereich der Drehlager der Klemmbacken verlegt sind. Dadurch ergibt sich ein platzsparender Aufbau, weil auf Schwenkarme verzichtet werden kann. Ferner können hohe Drehmomente von der einen Verzahnung über die Zahnstange auf die andere Verzahnung übertragen werden, weil die beiden Verzahnungen unmittelbar im Drehzentrum der Klemmbacken angeordnet sind. Auf diese Weise wird eine zwangsläufige und spielfreie Synchronisation zwischen der Schwenkbewegung der einen Klemmbacke in Richtung zur Schwenkbewegung der anderen Klemmbacke erzielt, sodass beide Klemmbacken absolut spielfrei und stets synchron zueinander angetrieben sind, und ein Spiel, wie es bei einer Langloch-Bolzenführung oder einer scherenartigen Führung zur Synchronisation nach dem Stand der Technik bekannt war, nicht mehr auftreten kann.

In einer Ausführungsform, die nicht unter den Schutzumfang der Ansprüche fällt, ist die Zahnstange nicht federbelastet vorgespannt. In dieser Ausführungsform ist vorgesehen, dass der Klemmhalter an einer Wandfläche befestigt wird und dass sich deshalb die Schließstellung der Klemmbacken schwerkraftbedingt ergibt, so wie es beim Stand der Technik ebenfalls der Fall war.

In der vorliegenden Erfindung ist es jedoch vorgesehen, dass die Zahnstange federbelastet in eine bestimmte Ausgangsstellung gezogen wird, wobei die Federkraft bevorzugt durch eine Zugfeder erreicht wird. Durch diesen Kraftspeicher wird gesorgt, dass die Klemmbacken federbelastet in Schließstellung vorgespannt sind und damit in Schließstellung praktisch ein gegen Null gehender Klemmspalt vorliegt.

Damit besteht erstmals die Möglichkeit, sehr dünne oder schmale Gegenstände zu klemmen. Es ist sogar möglich, mit den Merkmalen der Erfindung einen Klemmhalter zu schaffen, mit dem eine Visitenkarte oder andere dünne und leichte Gegenstände einwandfrei geklemmt werden können.

Durch die Federvorspannung der Zahnstange, die der Synchronisierung der Schwenkbewegung der beiden einander zugeordneten Klemmbacken dient, ist ferner sichergestellt, dass der Klemmhalter an jedem beliebigen Einbauort und jeder beliebigen Einbaulage montiert werden kann. Der Klemmhalter ist deshalb nicht mehr darauf angewiesen, dass sich die Klemmbacken schwerkraftbedingt in ihre Schließstellung begeben, weil die Federvorspannung der Zahnstange dafür sorgt, dass unabhängig von der Einbaulage des Klemmhalters die Klemmbacken immer in eine federvorgespannte Ausgangsstellung oder Nullstellung übergehen.

Deshalb wird der Klemmhalter nach der Erfindung auch als Universalklemmhalter bezeichnet, weil er auch über Kopf, seitlich oder an schrägen Befestigungsflächen montiert werden kann, und aufgrund der Federvorspannung der Klemmbacken stets dafür gesorgt ist, dass die Klemmbacken in eine federvorgespannte Schließstellung kommen.

Nach den technischen Merkmalen des Anspruches 1 ist es zunächst gleichgültig, wo die Zahnstange eingebaut ist. Sie kann sichtbar an der Oberseite auf der Grundplatte des Klemmhalters befestigt sein; sie kann jedoch auch unsichtbar im Bodenteil des Klemmhalters, das heißt also an der Rückseite des Klemmhalters, angeordnet sein.

In der nachfolgenden Beschreibung wird der einfacheren Beschreibung wegen davon ausgegangen, dass die der Synchronisation dienende Zahnstange im Bodenteil verdeckt angeordnet ist, was dafür sorgt, dass die Zahnstange und die gesamte Synchronisationsmechanik gegen Verschmutzung und Verschleiß oder gegen das Eindringen von Fremdkörpern geschützt ist. Außerdem ist eine Verletzungsgefahr ausgeschlossen, weil es nicht mehr möglich ist, in die Synchronisationsmechanik einzugreifen, wie es beim Stand der Technik der Fall war.

Somit ist die Synchronisationsmechanik auch gegen Beschädigungen geschützt, denn in der bevorzugten Ausgestaltung ist die Zahnstange im Bodenbereich der Grundplatte angeordnet. Die Verschiebungssteuerung erfolgt dort durch zugeordnete Anschlag- und Längsführungsrippen, wobei der Einbauraum, in dem die Zahnstange aufgenommen ist, durch einen Deckel abgedeckt ist.

In einer Weiterbildung der Erfindung ist vorgesehen, dass die Offenstellung der Klemmbacken einrastbar ausgebildet ist. Für diesen Fall kann es vorgesehen sein, dass im Verschiebungsweg der Zahnstange ein Rastmittel angeordnet ist, zum Beispiel eine Übertotpunktfeder oder dergleichen, sodass erst von der eingerasteten Offenstellung in die Schließstellung durch Überwindung mit einer bestimmten Schließkraft übergegangen werden kann.

Statt der hier erwähnten Zugfeder, welche die Zahnstange in der Schließstellung vorspannt, können auch sämtliche anderen bekannten Kraftspeicher verwendet werden, wie zum Beispiel elastomere Kraftspeicher, Schenkelfedern, Winkelfedern, Schraubendruckfedern und dergleichen mehr.

Gemäß der Erfindung ist es vorgesehen, dass die Betätigung der Klemmbacken mit einer einzigen Hand erfolgt, das heißt, mithilfe des zu klemmenden Gegenstandes selbst, der von einer Hand gehalten ist. Es reicht also aus, den zu klemmenden Gegenstand gegen die unter Federlast geschlossenen Klemmbacken zu führen, damit diese sich selbsttätig öffnen und der zu haltende Gegenstand in den Öffnungsspalt eingeführt werden kann.

Hierzu ist vorgesehen dass oberhalb der Halteplatten, die Teil der drehbaren Klemmbacken sind, schräg konisch nach außen und oben gerichtete Öffnungsansätze vorhanden sind, die Einführschrägen ausbildet, in welche der Gegenstand eingedrückt wird, wodurch sich die Klemmbacken selbsttätig entgegen der Federkraft der Zugfeder an der Zahnstange öffnen und den Klemmspalt freigeben.

Damit ist erstmals eine Einhandbedienung möglich, ohne dass eine Hand zum Öffnen oder Schließen der Klemmbacken notwendig ist.

In einer bevorzugten Ausgestaltung der Erfindung ist im Übrigen vorgesehen, dass die klemmende Oberfläche der Klemmbacken mit einem Klemmbelag versehen ist, wobei der Klemmbelag bevorzugt aus einem elastomeren Werkstoff besteht.

Es kann jedoch vorgesehen sein, dass die Klemmbacken und der Klemmbelag aus einem 2-Komponenten-Kunststoff bestehen, wodurch der Klemmbelag als weicher elastomerer Kunststoff direkt auf das härtere übrige Material der Klemmbacke angespritzt ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung erfindungswesentliche Merkmale und Vorteile der Erfindung hervor.

Es zeigen:
- Figur 1:: Draufsicht auf den Klemmhalter nach der Erfindung
- Figur 2:: Draufsicht auf die Oberseite der Grundplatte bei abgenommenem Deckel gemäß dem Schnitt B-B in Figur 3
- Figur 3:: Stirnansicht der Anordnung im geschlossenen Zustand
- Figur 4:: Schnitt durch die Anordnung nach dem Schnitt A-A in Figur 1

Der Klemmhalter besteht im Wesentlichen aus einer Grundplatte 1, die von einem Deckel 2 nach oben abgedeckt ist.

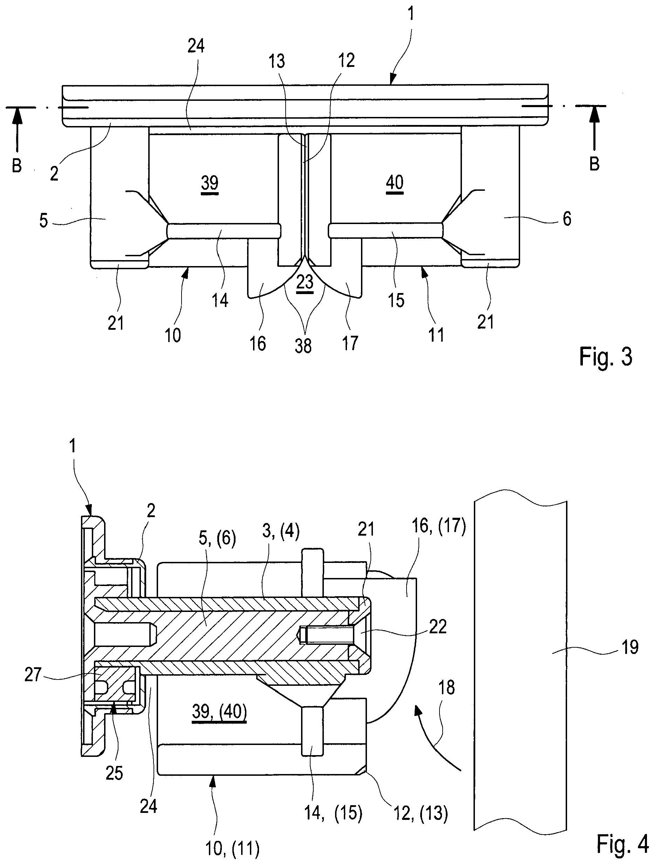

Bevorzugt werkstoffeinstückig mit der Grundplatte 1 sind gemäß Figur 4 zwei im Abstand zueinander angeordnete Achszapfen 3, 4 ausgebildet, welche die Drehlager für die später zu beschreibenden Klemmbacken 10, 11 bilden.

Jede Achshülse 5, 6 ist Bestandteil jeweils einer Klemmbacke 10, 11 und ist werkstoffeinstückig mit dieser verbunden. Dies ergibt sich beispielsweise aus Figur 4, wobei erkennbar ist, dass die Achshülse 5, 6 jeweils über einen Verbindungsansatz werkstoffeinstückig mit jeweils einer Halteplatte 14, 15 verbunden ist.

Senkrecht zu der jeweiligen Halteplatte 14, 15 erstrecken sich gebogene Krümmungsflächen 39, 40, die an ihrer Außenseite jeweils mit einem Klemmbelag 12, 13 belegt sind.

Der Klemmbelag 12, 13 kann also entweder als getrenntes Teil auf die Krümmungsfläche 39, 40 aufgeklebt werden oder die Krümmungsflächen 39, 40 können insgesamt als Klemmbelag 12, 13 aus einem einzigen elastomeren Teil ausgebildet sein.

In einer anderen Ausgestaltung kann es vorgesehen sein, dass das aus einem einheitlichen Material bestehende Teil, bestehend aus Krümmungsfläche 39, 40 und Klemmbelag 12, 13, getrennt zu den übrigen Teilen der Klemmbacke mit dieser verbindbar ist.

Ebenso kann es vorgesehen sein, dass diese Teile ein werkstoffeinstückiges Teil der Klemmbacke 10, 11 bilden.

Zur Synchronisation der Schwenkbewegung der beiden einander zugeordneten Klemmbacken 10, 11 ist die erfindungsgemäße Synchronmechanik vorgesehen, die im Wesentlichen aus einer in einer Ausnehmung 31 in der Grundplatte 1 angeordneten und verschiebbar gelagerten Zahnstange 25 besteht.

Die Zahnstange 25 weist einander entgegengesetzt ausgebildete Abkröpfungen 26, 27 auf, an deren vorderen freien Ende jeweils ein Zahnteil 28 angeordnet ist.

Jedes Zahnteil 28 kämmt mit einer zugeordneten Teilverzahnung 7, 8 am Außenumfang der Achshülse 5, 6.

Die Zahnstange 25 ist (in Pfeilrichtung 37 und in Gegenrichtung hierzu) verschiebbar in der Ausnehmung 31 der Grundplatte 1 gelagert, wobei eine rechte Anschlagrippe 29 die Verschiebung nach rechts und eine linke Anschlagrippe 30 die Verschiebung nach links begrenzt, während im Winkel hierzu stehende und parallel zur Bewegungsrichtung der Zahnstange 25 beabstandete Längsführungsrippen 32 zur Längsführung in der Grundplatte 1 vorgesehen sind. Dadurch ist eine stabile Längs- und Querführung für die Zahnstange 25 gegeben, die somit hohe Klemmkräfte von der einen zur anderen Klemmbacke 10, 11 übertragen kann, ohne dass es zu einem Ausknicken oder einer unzulässigen, anderen Verformung der Zahnstange 25 kommen kann. Hier hilft auch der bodenseitige Abschluss der Grundplatte 1 durch einen Deckel 2, der die Zahnstange 25 über deren gesamten Flachseite hinweg gegen ein Ausbauchen bei der Übertragung hoher Synchronisationskräfte schützt.

Im mittleren Bereich der Zahnstange ist ein Befestigungspunkt 34 vorgesehen, an dem das eine Ende einer Zugfeder 33 angreift, deren anderes Ende ortsfest auf der Grundplatte 1 an einem Befestigungspunkt 35 festgelegt ist.

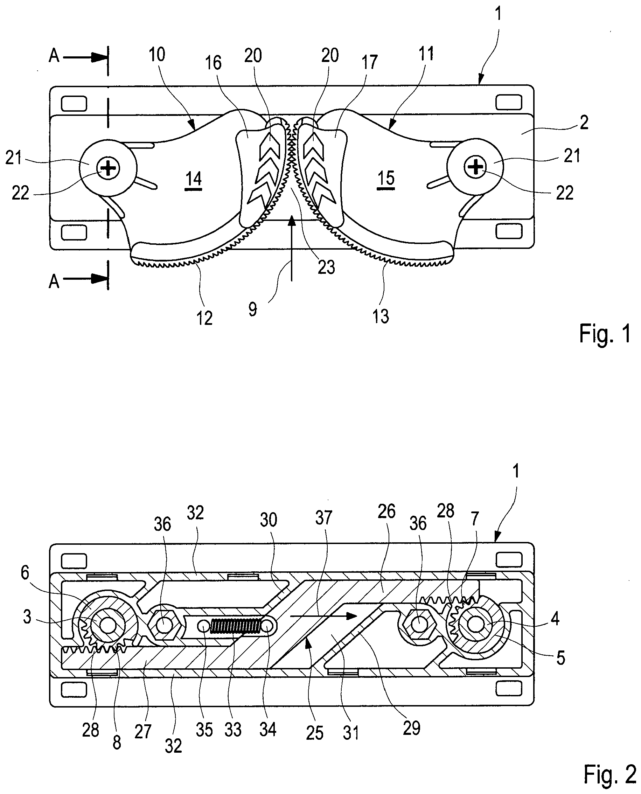

Wichtig bei der Ausführungsform nach Figur 2 ist, dass die Zugfeder 33 auch in der geschlossenen Stellung nach Figur 1 oder Figur 3 die beiden Klemmbacken 10, 11 stets in Schließstellung federvorbelastet hält, sodass der Einführspalt 23 stets federvorbelastet geschlossen ist.

Um eine Betätigung des Klemmhalters ohne Einwirkung einer Hand zu ermöglichen, ist es vorgesehen, dass die Öffnung des Klemmhalters und die Herstellung der Spannwirkung durch den zu haltenden Gegenstand 19 (siehe Figur 4) selbst erfolgt. Der Gegenstand 19, der hier beispielsweise als Rundrohr ausgebildet ist, wird in Einführrichtung 18 gegen obere schräg mit Einführschrägen 38 versehene Öffnungsansätze 16, 17 geführt, die als Einführrippen fest auf den Halteplatten 14, 15 angeformt sind.

Auf diesen Öffnungsansätzen 16, 17 können noch zusätzliche Markierungen 20 angebracht sein, um auch visuell deutlich zu machen, dass ein in Einführrichtung 18 gegen den Halter bewegter Gegenstand nur auf die Öffnungsansätze 16, 17 aufgesetzt und eingedrückt werden muss, um so die beiden Klemmbacken 10, 11 federbelastet zu öffnen.

Die beiden Klemmbacken 10, 11 führen eine Schwenkbewegung in Pfeilrichtung 9 durch, um den Einführspalt 23 zu öffnen.

Um eine freie Verschwenkung der beiden Klemmbacken 10, 11 in Bezug zur Grundplatte 1 zu ermöglichen, ist ein Freiraum 24 oberhalb des Deckels 2 der Grundplatte 1 vorgesehen.

Figuren 1 und 4 zeigen im Übrigen eine Scheibe 21, die als Abzugssicherung die Achshülsen 5, 6 dient, damit diese nicht von den feststehenden Achszapfen 3, 4 abgezogen werden können. Die Scheibe 21 wird mit jeweils einer Schraube 22 in der Achshülse 5, 6 festgelegt, und dient als Abzugssicherung für die Achshülsen 5, 6, die sich unter der Scheibe 21 drehen.

Im Bereich unterhalb des Deckels 2 sind in der Ausnehmung 31 der Grundplatte 1 noch Anschraubbohrungen 36 vorgesehen, durch welche nicht näher dargestellte Schrauben hindurch greifen, die den Klemmhalter an einer Haltefläche festlegen.

Vorteil des Klemmhalters ist, dass er wegen der Federvorspannung der Zahnstange 25 in jeder beliebigen Montagelage oder Befestigungslage gehalten werden kann, sodass es sogar möglich ist, den erfindungsgemäßen Klemmhalter mit einem Handgriff zu versehen, um den Klemmhalter als Halte- oder Tragewerkzeug zu verwenden, mit dem beispielsweise schwere Spanplatten, Glasplatten oder andere Elemente von einer Person getragen werden können.

In einer Ausführungsform, die nicht unter den Schutzumfang der Ansprüche fällt, können statt der Verwendung einer Zahnstange als Getriebeelement der Synchronmechanik auch gleichwirkende, andere Getriebeelemente, wie halbrunde, miteinander kämmende Zahnräder oder dgl. verwendet werden.

**Zeichnungslegende**

| | | | |
|---|---|---|---|
| 1 | Grundplatte | 21 | Scheibe |
| 2 | Deckel | 22 | Schraube |
| 3 | Achszapfen links | 23 | Einführspalt |
| 4 | Achszapfen rechts | 24 | Freiraum |
| 5 | Achshülse links | 25 | Zahnstange |
| 6 | Achshülse rechts | 26 | Abkröpfung (von 25) |
| 7 | Teilverzahnung links | 27 | Abkröpfung (von 25) |
| 8 | Teilverzahnung rechts | 28 | Zahnteil |
| 9 | Pfeilrichtung | 29 | Anschlagrippe |
| 10 | Klemmbacke links | 30 | Anschlagrippe |
| 11 | Klemmbacke rechts | 31 | Ausnehmung |
| 12 | Klemmbelag links | 32 | Längsführungsrippe |
| 13 | Klemmbelag rechts | 33 | Zugfeder |
| 14 | Halteplatte | 34 | Befestigungspunkt |
| 15 | Halteplatte | 35 | Befestigungspunkt |
| 16 | Öffnungsansatz | 36 | Anschraubbohrung |
| 17 | Öffnungsansatz | 37 | Pfeilrichtung |
| 18 | Einführrichtung | 38 | Einführschräge |
| 19 | Gegenstand | 39 | Krümmungsfläche |
| 20 | Markierung | 40 | Krümmungsfläche |

## Patentansprüche

1. Klemmhalter mit zwei einander bezüglich einer Grundplatte (1) spiegelbildlich einander gegenüberliegenden Klemmbacken (10, 11), die in Abhängigkeit voneinander und auf mit Abstand voneinander auf einer Grundplatte (1) des Klemmhalters angeordneten Achszapfen (3, 4) des Klemmhalters drehbar sind, wobei die Klemmbacken (10, 11) mit Achshülsen (5, 6) des Klemmhalters verbunden sind, die auf den Achszapfen (3, 4) drehbar gelagert sind, und wobei der Klemmhalter eine Synchronisationsmechanik zur Übertragung der Schwenkbewegung von der einen auf die andere Klemmbacke (10, 11) aufweist, die aus mindestens einem verzahnten Getriebeelement gebildet ist, wobei das Getriebeelement durch eine Zahnstange (25) gebildet ist, die an ihren beiden entgegen gesetzten Enden jeweils einen Zahnteil (28) trägt, der jeweils in Verzahnungseingriff mit jeweils einer Teilverzahnung (7, 8) auf dem Außenumfang der Achshülse (5, 6) der Klemmbacke (10, 11) ist, **dadurch gekennzeichnet, dass** die Zahnstange (25) durch ein Federelement des Klemmhalters vorgespannt ist, welche die Klemmbacken (10, 11) in der Schließstellung vorspannt, wobei das Federelement an der Zahnstange (25) angreift, und der Klemmhalter dazu vorgesehen ist, dass die Betätigung der Klemmbacken (10, 11) mit einer einzigen Hand erfolgen kann, das heißt, mithilfe des zu klemmenden Gegenstand selbst, der von einer Hand gehalten ist.

2. Klemmhalter nach Anspruch 1, **dadurch gekennzeichnet, dass** die Achshülsen (5, 6) jeweils über einen Verbindungsansatz werkstoffeinstückig mit jeweils einer Halteplatte (14, 15) verbunden sind und sich senkrecht zu der jeweiligen Halteplatte (14, 15) gebogene Krümmungsflächen (39, 40) erstrecken.

3. Klemmhalter nach Anspruch 1 oder 2, **dadurch gekennzeichnet, dass** die Zahnstange (25) an der Rückseite des Klemmhalters angeordnet ist.

4. Klemmhalter nach einem der Ansprüche 1 bis 3, **dadurch gekennzeichnet, dass** die Offenstellung der Klemmbacken (10, 11) einrastbar ausgebildet ist.

5. Klemmhalter nach einem der Ansprüche 1 bis 4, **dadurch gekennzeichnet, dass** die Klemmbacken (10, 11) mit Halteplatten (14, 15) verbunden sind, an denen bezüglich eines Einführspaltes (23) des Klemmhalters schräg konisch nach außen und oben gerichtete Öffnungsansätze (16, 17) angeformt sind, die Einführschrägen (38) ausbilden, in welche der Gegenstand eingedrückt wird.

6. Klemmhalter nach einem der Ansprüche 1 bis 5, **dadurch gekennzeichnet, dass** die Klemmbacken (11, 12) einen elastomeren Klemmbelag (12, 13) tragen.

7. Klemmhalter nach einem der Ansprüche 1 bis 6, **dadurch gekennzeichnet, dass** die Zahnstange (25) in einer Ausnehmung (31) in der Grundplatte (1) verschiebbar gelagert ist.

8. Klemmhalter nach einem der Ansprüche 1 bis 7, **dadurch gekennzeichnet, dass** die Verschiebung der Zahnstange (25) durch Anschlagrippen (29, 30) an der Bodenseite der Grundplatte (1) begrenzt ist.

9. Klemmhalter nach einem der Ansprüche 1 bis 8, **dadurch gekennzeichnet, dass** eine Längsführung der Zahnstange (25) durch parallel zur Bewegungsrichtung der Zahnstange (25) voneinander beabstandete Längsführungsrippen (32) erfolgt.

10. Klemmhalter nach einem der Ansprüche 1 bis 9, **dadurch gekennzeichnet, dass** im mittleren Bereich der Zahnstange (25) ein Befestigungspunkt (34) für das eine Ende einer Zugfeder (33) angeordnet ist, deren anderes Ende ortsfest auf der Grundplatte 1 in einem Befestigungspunkt (35) festgelegt ist.

## Claims

1. Clamp holder having two clamping jaws (10, 11) which are located opposite each other in inverse symmetry to a base plate (1) and which are rotatable as a function of each other and on shaft journals (3, 4) of the clamp holder arranged at a distance from each other on a base plate (1) of the clamp holder, wherein the clamping jaws (10, 11) are connected to shaft sleeves (5, 6) of the clamp holder which are mounted so as to be rotatable on the shaft journals (3, 4), and wherein the clamp holder has a synchronising mechanism for transmitting the pivot movement from one clamping jaw (10, 11) to the other, which is composed of at least one toothed gear element, wherein the gear element is formed by a rack (25) which, at each of its two opposite ends, has a tooth portion (28) which meshes with a partial tooth system (7, 8) on the outer periphery of the shaft sleeve (5, 6) of the clamping jaw (10, 11), **characterised in that** the rack (25) is biased by a spring element of the clamp holder which biases the clamping jaws (10, 11) in the closed position, wherein the spring element engages the rack (25), and the clamp holder is provided so that actuation of the clamping jaws (10, 11) can be effected with one hand, that is to say, with the aid of the object itself to be clamped, which is held by one hand.

2. Clamp holder according to claim 1, **characterised in that** the shaft sleeves (5, 6) are in each case connected by a connecting attachment in one piece with the material of a holding plate (14, 15) each and extend perpendicularly to curved surfaces (39, 40) which are bent relative to the respective holding plate (14, 15).

3. Clamp holder according to claim 1 or 2, **characterised in that** the rack (25) is arranged on the rear side of the clamp holder.

4. Clamp holder according to one of claims 1 to 3, **characterised in that** the open position of the clamping jaws (10, 11) is designed so as to be lockable.

5. Clamp holder according to one of claims 1 to 4, **characterised in that** the clamping jaws (10, 11) are connected to holding plates (14, 15) on which are integrally formed opening attachments (16, 17) which are directed obliquely conically outwards and upwards with respect to an insertion gap (23) of the clamp holder and which form insertion ramps (38) into which the object is pressed.

6. Clamp holder according to one of claims 1 to 5, **characterised in that** the clamping jaws (11, 12) carry an elastomeric clamping coating (12, 13).

7. Clamp holder according to one of claims 1 to 6, **characterised in that** the rack (25) is mounted so as to be slidable in a recess (31) in the base plate (1).

8. Clamp holder according to one of claims 1 to 7, **characterised in that** sliding of the rack (25) is limited by stop ribs (29, 30) on the bottom side of the base plate (1).

9. Clamp holder according to one of claims 1 to 8, **characterised in that** longitudinal guiding of the rack (25) is effected by longitudinal guide ribs (32) spaced apart from each other parallel to the direction of movement of the rack (25).

10. Clamp holder according to one of claims 1 to 9, **characterised in that** in the central region of the rack (25) is arranged a fastening point (34) for one end of a tension spring (33) of which the other end is fixed stationarily to the base plate (1) at a fastening point (35).

## Revendications

1. Support de serrage avec deux mâchoires de serrage (10, 11) qui sont opposées en miroir par rapport à une plaque de base (1) et qui sont aptes à tourner en fonction l'une de l'autre et sur des tourillons (3, 4) du support de serrage disposés de manière espacée sur une plaque de base (1) dudit support, les mâchoires de serrage (10, 11) étant reliées à des manchons de tourillons (5, 6) du support de serrage qui sont montés en rotation sur les tourillons (3, 4), et le support de serrage comportant un mécanisme de synchronisation, pour transmettre le mouvement pivotant d'une mâchoire de serrage (10, 11) à l'autre, qui se compose d'au moins un élément de transmission denté, l'élément de transmission étant formé par une crémaillère (25) qui porte à chacune de ses extrémités opposées une pièce dentée (28) qui s'engrène avec une denture partielle respective (7, 8) prévue sur la circonférence extérieure du manchon de tourillon (5, 6) de la mâchoire de serrage (10, 11),
**caractérisé en ce que** la crémaillère (25) est contrainte par un élément à ressort du support de serrage qui contraint les mâchoires de serrage (10, 11) dans la position fermée, l'élément à ressort agissant sur la crémaillère (25), et le support de serrage étant prévu pour que l'actionnement des mâchoires de serrage (10, 11) puisse se faire avec une seule main, c'est-à-dire à l'aide de l'objet à serrer lui-même qui est tenu par une main.

2. Support de serrage selon la revendication 1, **caractérisé en ce que** les manchons de tourillons (5, 6) sont reliés chacun d'une seule pièce, par l'intermédiaire d'une saillie de liaison, à une plaque de fixation (14, 15), et des surfaces courbes (39, 40) s'étendent perpendiculairement aux plaques de fixation respectives (14, 15).

3. Support de serrage selon la revendication 1 ou 2, **caractérisé en ce que** la crémaillère (25) est disposée sur le côté arrière du support de serrage.

4. Support de serrage selon l'une des revendications 1 à 3, **caractérisé en ce que** la position ouverte des mâchoires de serrage (10, 11) est conçue pour pouvoir être verrouillée.

5. Support de serrage selon l'une des revendications 1 à 4, **caractérisé en ce que** les mâchoires de serrage (10, 11) sont reliées à des plaques de fixation (14, 15) sur lesquelles sont rapportées des saillies d'ouverture (16, 17) qui sont dirigées en biais, avec une forme conique, vers l'extérieur et vers le haut par rapport à une fente d'introduction (23) du support de serrage, et qui forment des biseaux d'introduction dans lesquels on enfonce l'objet.

6. Support de serrage selon l'une des revendications 1 à 5, **caractérisé en ce que** les mâchoires de serrage (11, 12) portent un revêtement de serrage élastomère (12, 13).

7. Support de serrage selon l'une des revendications 1 à 6, **caractérisé en ce que** la crémaillère (25) est montée de manière à pouvoir coulisser dans une cavité (31) prévue dans la plaque de base (1).

8. Support de serrage selon l'une des revendications 1 à 7, **caractérisé en ce que** le coulissement de la crémaillère (25) est limité par des nervures de butée (29, 30) prévues sur le côté du fond de la plaque de base (1).

9. Support de serrage selon l'une des revendications 1 à 8, **caractérisé en ce qu'**un guidage longitudinal de la crémaillère (25) se fait grâce à des nervures de guidage longitudinal (32) espacées les unes des autres parallèlement au sens de déplacement de la crémaillère (25).

10. Support de serrage selon l'une des revendications 1 à 9, **caractérisé en ce qu'**il est prévu dans la zone centrale de la crémaillère (25) un point de fixation (34) pour une extrémité d'un ressort de traction (33) dont l'autre extrémité est fixée de manière stationnaire sur la plaque de base (1) dans un point de fixation (35).
